# DEMANDE DE BREVET EUROPEEN

(11) **EP 3 336 619 A1**
(43) Date de publication de la demande: **20.06.2018**
(21) Numéro de dépôt: 16204485.3
(22) Date de dépôt: 15.12.2016
(51) Int. Cl.: G04G 21/04, A44C 5/00

(54) **PROCEDE DE REALISATION D'UN BRACELET INTELLIGENT MUNI D'UN INSERT A COMPOSANTS ELECTRONIQUES**

(71) Demandeur: The Swatch Group Research and Development Ltd, 2074 Marin (CH)
(72) Inventeur: François, Nicolas, 2000 Neuchâtel (CH); Rannoux, Claire, 1110 Morges (CH); Nicolas, Cédric, 2000 Neuchâtel (CH)
(74) Mandataire: Giraud, Eric

(57) **Abrégé**

La présente invention concerne un procédé de réalisation d'un bracelet muni d'un insert (1') à composants électroniques. Le procédé comprend les étapes consistant à :
- fabriquer un support souple (2) de base d'un insert (1') sous forme de bande,
- réaliser des pistes conductrices (3) sur le support souple (2) ou dans le support souple (2),
- disposer sur le support souple (2) différents composants électroniques (4, 5, 6) reliés aux pistes conductrices (3), et
- enrober les composants électroniques (4, 5, 6) disposés sur le support souple (2) dans une couche de protection (7) transparente ou opaque pour finaliser l'insert (1') du bracelet (1).

## Description

### Domaine de l'invention

L'invention se rapporte à un procédé de réalisation d'un bracelet intelligent muni d'un insert à composants électroniques.

L'invention se rapporte également au bracelet obtenu selon le procédé de réalisation du bracelet.

### Arrière-plan de l'invention

Traditionnellement, les bracelets de montres sont réalisés en cuir, en matière synthétique, en tissu, en matière caoutchouteuse, ou en métal. Les bracelets comprennent également un insert disposé dans une doublure ou un fourreau ou entre une bande supérieure et une bande inférieure réunies l'une à l'autre par la suite. Cet insert a une fonction principalement mécanique et flexible.

Dans le cas d'un bracelet en cuir, l'insert est constitué de renfort indéchirable et de rembourrage en cuir et en non tissé pour donner le relief au bracelet. Une doublure en cuir est encore prévue, ainsi qu'un dessus en cuir ou synthétique. Le dessus est rembordé sous la doublure, ce qui permet d'obtenir un bracelet très résistant.

Selon une variante d'exécution, le bracelet comporte un dessus, qui n'est rembordé que sur les côtés du bracelet pour être du type semi-rembordé. La réalisation du bracelet semi-rembordé ou rembordé-machine se fait à l'aide d'un moule et d'une presse à plateau

Il peut encore être imaginé un bracelet en cuir du type coupé franc, dans lequel toutes les couches sont collées les unes aux autres. Une préforme peut ensuite être découpée à la forme de chaque brin du bracelet par une presse. Les bords du bracelet sont par la suite protégés par une laque de tranche. Cependant l'insert de ce type de bracelet n'est prévu que comme renfort indéchirable et flexible.

Actuellement, des composants électroniques peuvent être intégrés dans le bracelet, mais on constate que leur intégration est difficile pour garantir une protection suffisante aux différentes conditions de l'environnement ou à l'humidité ou à la sueur lors du porté de la montre. Plusieurs montres ont déjà été proposées avec un bracelet muni de composants électroniques pour une connexion sans fil avec un autre dispositif, tel qu'un téléphone portable ou un autre instrument. Cependant, la protection des composants électroniques reste insuffisante, ce qui constitue un inconvénient. De plus, l'épaisseur générale du bracelet est souvent trop importante et les composants électroniques restent visibles, ce qui nuit également à l'esthétisme du bracelet.

On peut citer à ce titre la demande de brevet FR 2 641 092 A2, qui décrit un bracelet d'une montre. Le bracelet comprend une partie de connexion électrique à la boîte de montre, ainsi qu'un ensemble de composants électroniques, qui sont au moins un circuit intégré et une source d'énergie. Cependant, il n'est pas défini une protection suffisante des composants électroniques aux conditions environnementales, ce qui constitue un inconvénient. Les composants électroniques restent aussi visibles dans le bracelet, ce qui nuit à l'aspect esthétique du bracelet.

Dans la demande de brevet WO 2016/125034 A1, il est décrit un bracelet traditionnel, dans lequel sont intégrés plusieurs composants électroniques le long d'un brin ou des deux brins du bracelet. Ces composants électroniques ne sont pas protégés contre les conditions environnementales et contre les chocs, ce qui est un inconvénient.

### Résumé de l'invention

L'objet de la présente invention est de pallier les problèmes susmentionnés de l'état de la technique en proposant un procédé de réalisation d'un bracelet intelligent muni d'un insert à composants électroniques bien protégés des conditions environnementales et de faible épaisseur.

A cet effet, l'invention a pour objet un procédé de réalisation d'un bracelet intelligent, qui comprend les caractéristiques mentionnées dans la revendication indépendante 1.

Des étapes particulières du procédé de réalisation du bracelet intelligent sont définies dans les revendications dépendantes 2 à 16.

Un avantage du procédé de réalisation d'un bracelet intelligent réside dans le fait que l'insert à composants électroniques est obtenu, à la forme tridimensionnelle finale du bracelet, avec une protection des composants électroniques à la sueur au porté de la montre ou du bracelet, à l'humidité en général, aux différents chocs mécaniques et aux différentes conditions environnementales. De plus, l'épaisseur générale de l'insert défini comme plastronique est suffisamment réduite de manière à pouvoir remplacer un insert de renfort traditionnel dans une doublure en cuir ou en matière synthétique d'un bracelet sans augmenter l'épaisseur traditionnelle d'un tel bracelet.

L'invention a également pour objet un bracelet réalisé selon le procédé de réalisation du bracelet, qui comprend les caractéristiques définies dans la revendication indépendante 17.

Des formes d'exécution particulières du bracelet sont définies dans les revendications dépendantes 18 à 20.

### Brève description des dessins

Les buts, avantages et caractéristiques du procédé de réalisation d'un bracelet intelligent muni d'un insert à composants électroniques apparaîtront mieux dans la description suivante par les dessins sur lesquels :
Les figures 1a à 1d représentent différentes étapes du procédé de réalisation d'un insert à composants électroniques d'un bracelet selon l'invention, et
la figure 2 représente un brin de bracelet muni d'un insert de type plastronique selon l'invention.

### Description détaillée de l'invention

Dans la description suivante, tous les composants électroniques montés dans le bracelet, qui sont bien connus d'un homme du métier dans ce domaine technique, ne sont décrits que de manière simplifiée. Les composants électroniques peuvent comprendre un microprocesseur, un oscillateur, des capteurs de mesure de paramètres physiques, un circuit de communication sans fil, une batterie flexible, un dispositif d'affichage par exemple du type OLED. L'insert à composants électroniques est défini comme un insert du type plastronique.

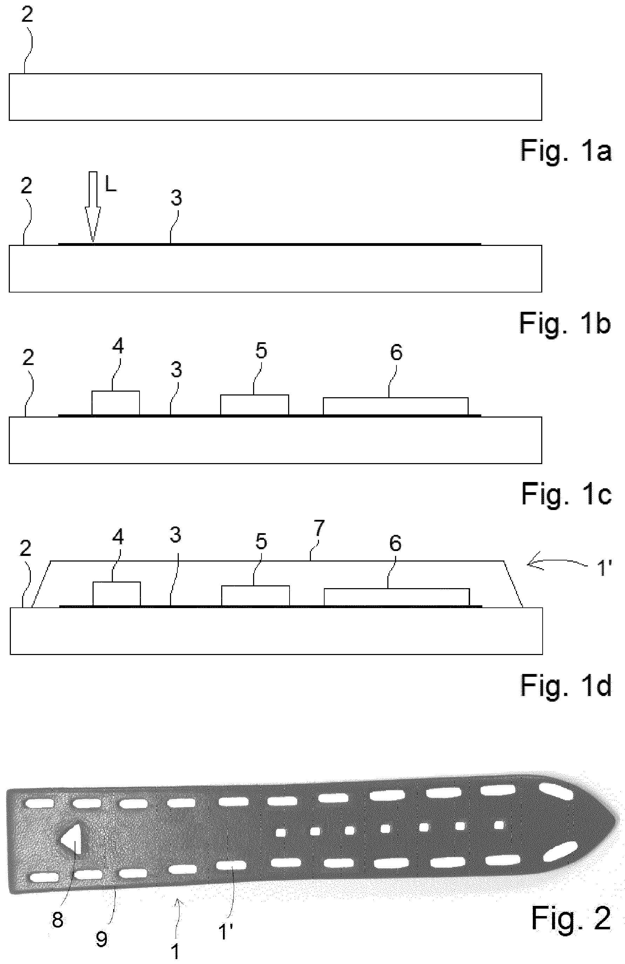

Les figures 1a à 1d représentent différentes étapes de la réalisation notamment d'un insert 1' du type plastronique avec le montage de plusieurs composants électroniques pour un bracelet, tel qu'un bracelet de montre, en vue de côté. L'insert peut être composé d'un support plastique souple. Ce support peut être de diverses couleurs, de dureté de l'ordre de 30 shore A à 90 shore A et une résistance à au moins 500 cycles de pliages positifs et négatifs à 180°. Il doit résister à une traction supérieure à 250 N. Il a une bonne résistance chimique aux colles et solvants à la sueur et à l'eau, aux produits cosmétiques. Il doit avoir encore une bonne compatibilité chimique avec les colles chloroprènes et polyuréthanes. La matière utilisée pour le plastique est transparente aux ondes électromagnétiques.

Pour l'obtention du bracelet intelligent muni d'un insert 1' à composants électroniques, il est tout d'abord important de fabriquer un support souple 2 sous forme de bande de faible épaisseur, vu en figure 1a. Le support souple 2 en forme de bande doit être en matière plastique souple. Ce support souple 2 est une partie de base d'un insert 1' à composants électroniques conçu pour pouvoir être placé dans un fourreau traditionnel ou entre une bande supérieure et une bande inférieure d'au moins un brin d'un bracelet final ou enrobé dans un élastomère vulcanisé du bracelet comme expliqué ci-après.

Dans un procédé avantageux de l'invention, ce support souple 2 constitue la base du circuit imprimé. Il est fabriqué en forme de bande dans une première étape du procédé au moyen d'une matière plastique ou thermoplastique, qui sera ensuite métallisée sélectivement par plasma (procédé plasmacoat 3D). Il peut être réalisé par extrusion d'une matière thermoplastique à travers une filière adaptée à la forme du bracelet ou d'au moins un des brins du bracelet. Il peut également être réalisé par moulage par injection. Le support souple peut être un thermoplastique de polyuréthane d'une dureté de 65 shore A à 90 shore A. Il peut également s'agir d'un autre élastomère thermoplastique répondant aux exigences souhaitées. Il peut aussi s'agir d'élastomères vulcanisés, tels qu'un caoutchouc nitrile ou un caoutchouc fluoré, d'une silicone ou d'un polyuréthane réticulé, qui seront mis en oeuvre par extrusion.

Dans un autre procédé avantageux, le support souple 2 en matière moulée peut comprendre dans sa masse un additif spécial (additif LDS Laser Direct structuring) sous la forme d'un complexe métallique organique, afin de pouvoir réaliser une métallisation sélective via le processus MID (Molded Interconnected Devices) développé par LPKF avec une réaction physico-chimique induite notamment par un faisceau laser focalisé. Ce procédé est décrit dans la demande de brevet WO 2012/056416 A1.

Dans une seconde étape du procédé vu en figure 1b, il est réalisé des pistes conductrices 3 sur le support souple 2 ou dans le support souple 2 pour pouvoir placer par la suite et relier des composants électroniques de l'insert. Les pistes conductrices 3 peuvent être obtenues soit par un procédé équivalent au procédé plasmacoat 3D, soit par activation au moyen d'un faisceau laser focalisé L, tel que le procédé MID développé par LPKF, qui est programmé selon le schéma de connexion électrique des composants. Pour réaliser cette opération, on peut se référer à l'article intitulé "Laser supported activation and additive metallization of thermoplastics for 3D-MIDS" de M. Hüske, J. Kickelhain, J.Müller, G. Esser dans la revue Proceedings of the 3rd LANE 2001, d'août 28-31, 2001, Erlangen, Germany, qui est incorporé ici par référence.

On notera que le procédé plasmacoat 3D apporte un avantage, car il évite le traitement galvanique de la pièce, afin de déposer le cuivre sur les pistes conductrices.

A la troisième étape montrée à la figure 1c, les différents composants électroniques 4, 5, 6 sont placés, fixés et électriquement connectés sur la surface du support souple 2, qui comporte les pistes conductrices 3. Pour la réalisation d'un insert du type plastronique, il peut être prévu un ou plusieurs capteurs 4, un microprocesseur 5 et une source d'énergie par exemple une batterie flexible 6. Les capteurs 4 peuvent être un capteur de pression, un capteur de température, un capteur de champ magnétique, un capteur d'accélération ou un autre type de capteur. Il peut encore être prévu un circuit de communication sans fil NFC, Bluetooth ou autre, un dispositif d'affichage par exemple OLED, un oscillateur, des commutateurs.

Finalement à la quatrième étape montrée à la figure 1d, les composants électroniques 4, 5, 6 sont enrobés dans une couche de protection 7, qui peut être transparente ou opaque. Cette couche de protection 7 permet de protéger tous les composants électroniques 4, 5, 6 des conditions environnementales, ainsi que de la sueur, lorsque le bracelet est porté au poignet, de l'humidité, de produits cosmétiques, de chocs mécaniques. La couche de protection 7 est réalisée avec une matière thermoplastique élastomère résistante à l'environnement et aux chocs mécaniques, telle qu'un polyuréthane surmoulé sur l'insert 1' du type plastronique. Elle peut aussi être réalisée avec une matière élastomère, telle qu'une silicone, un élastomère fluoré, un polyuréthane.

Il est encore à noter que la couche de protection 7 peut aussi avoir une fonction esthétique. A ce titre, elle contient des charges, telles que des pigments à effets spécifiques.

Dans un cas avantageux, il peut y avoir aussi une combinaison de pigments thermo-chromiques et de charges améliorant la conductivité thermique de la couche de protection 7. L'activité thermique de certains composants électroniques permet alors de modifier la couleur propre de la couche de protection 7.

Dans un autre cas avantageux, avant la couche de protection 7, une résine spéciale réticulable par radiations thermiques ou lumineuses peut être coulée sur certains composants électroniques sensibles. Cela permet de les protéger d'opérations de fabrications ultérieures agressives. Il peut s'agir de résine isolante thermique, ou électrique ou électromagnétique.

Dans une autre variante de réalisation, le support souple 2 peut être réalisé par co-extrusion de plusieurs matières et peut comprendre au moins deux bandes avec une bande à fonction technique et une autre bande à fonction décorative. Il peut être aussi prévu, par exemple, trois bandes disposées l'une au-dessus de l'autre ou côté à côte en vue de dessus. Dans ce dernier cas, une bande centrale est phosphorescente et deux bandes latérales sont en couleur fluorescente ou nacrées ou variochromiques. La tête de filière de l'instrument servant à réaliser le support souple, permet de réaliser un profil légèrement concave. Cela permet ensuite d'utiliser la bande centrale pour venir créer des décors qui viennent illuminer le bracelet de nuit et permet ainsi la lisibilité d'une information à visionner. Les bandes fluorescentes sur les côtés peuvent être utilisées pour créer des décors visibles de jour.

Il est encore à noter que le support souple 2 réalisé peut être composé de plusieurs matières injectées ou extrudées, et utilise des matériaux thermo-chromiques, qui changent de couleurs à différents seuils de température. Cela permet de créer un décor intelligent réagissant avec le fonctionnement de l'insert plastronique.

Des matériaux à mémoire de forme peuvent aussi être utilisés pour réaliser le support souple 2, comme le DESMOPAN 2795A SMP permettant de réaliser différents décors tridimensionnels à chaud par thermoformage. Une matière, qui contient des charges, peut aussi être utilisée pour améliorer le confort du porteur du bracelet (fragrances encapsulées, antibactérien, anti-sueur,...).

Une fois l'insert 1' du type plastronique terminé, cet insert peut être revêtu d'une couche en élastomère vulcanisé pour obtenir le bracelet. L'insert 1' peut aussi être placé dans un fourreau en cuir ou en matière synthétique ou tissée, ou entre une bande supérieure et une bande inférieure notamment en cuir, qui sont fixées l'une à l'autre pour obtenir le bracelet.

A la figure 2, il est représenté uniquement un brin d'un bracelet 1. L'insert 1' du type plastronique se trouve placé à l'intérieur d'une doublure en cuir 9. Comme précédemment indiqué, l'insert 1' une fois terminé peut être placé dans un fourreau en cuir 9 ou entre une bande supérieure et une bande inférieure en cuir. Des ouvertures peuvent être prévues dans la doublure en cuir 9 ou le dessus du bracelet, et permettent de faire apparaître soit le support souple ou la couche de protection de l'insert 1' du type plastronique. On propose par exemple une ouverture centrale 8 du bracelet 1 à proximité de sa fixation à une boîte de montre, pour obtenir un décor phosphorescent.

Dans le cas d'un support souple de l'insert 1' composé de trois bandes côte à côte, la bande centrale est phosphorescente et les deux bandes latérales sont fluorescentes pour rendre visible une information à visionner par exemple par les ouvertures en bordure du bracelet 1.

A partir de la description qui vient d'être faite, plusieurs variantes du procédé de réalisation d'un bracelet muni d'un insert du type plastronique, et le bracelet obtenu peuvent être conçues par l'homme du métier sans sortir du cadre de l'invention définie par les revendications. Les pistes conductrices sur le support souple de l'insert peuvent être réalisées par structuration d'une couche métallique déposée sur une surface du support souple ou par un autre type de couche conductrice structurable. Le bracelet réalisé peut être sous forme de boucle pour être porté au poignet. Il peut aussi être prévu de placer l'insert plastronique dans un bracelet à maillons métalliques et avoir une connexion électrique avec des composants électroniques disposés à l'intérieur d'une boîte de montre.

## Revendications

1. Procédé de réalisation d'un bracelet (1) muni d'un insert (1') à composants électroniques, le procédé comprenant les étapes consistant à :
- fabriquer un support souple (2) de base d'un insert (1') sous forme de bande,
- réaliser des pistes conductrices (3) sur le support souple (2) ou dans le support souple (2),
- disposer sur le support souple (2) différents composants électroniques (4, 5, 6) reliés aux pistes conductrices (3), et
- enrober les composants électroniques (4, 5, 6) disposés sur le support souple (2) dans une couche de protection (7) transparente ou opaque pour finaliser l'insert (1') du bracelet (1).

2. Procédé de réalisation d'un bracelet selon la revendication 1, **caractérisé en ce que** le support souple (2) est en matière plastique ou en matière thermoplastique obtenu par moulage dans un moule adapté à la forme du bracelet (1).

3. Procédé de réalisation d'un bracelet selon la revendication 2, **caractérisé en ce que** le support souple (2) est obtenu par une injection ou une extrusion d'une matière thermoplastique ou de plusieurs matières plastiques ou thermoplastiques dans le moule adapté.

4. Procédé de réalisation d'un bracelet selon la revendication 2, **caractérisé en ce que** le support souple (2) comprend au moins deux bandes disposées l'une au-dessus de l'autre ou côté à côte, **en ce qu'**une bande apporte une fonction technique, et **en ce que** l'autre bande apporte une fonction décorative.

5. Procédé de réalisation d'un bracelet selon la revendication 4, **caractérisé en ce que** la bande à fonction technique est à conductivité thermique pour les composants électroniques ou à blindage électromagnétique, et **en ce que** la bande à fonction décorative est en couleur fluorescente ou nacrée ou variochromique ou phosphorescente.

6. Procédé de réalisation d'un bracelet selon l'une des revendications précédentes, **caractérisé en ce que** le support souple (2) comprend dans sa masse un additif dans la forme d'un complexe organométallique.

7. Procédé de réalisation d'un bracelet selon la revendication 6, **caractérisé en ce que** les pistes conductrices (3) sont obtenues sur ou dans le support souple (2) ou dans la couche sur le support souple (2) par activation d'une réaction physico-chimique induite par un faisceau laser focalisé (L), qui est programmé selon le schéma de connexion électrique des composants.

8. Procédé de réalisation d'un bracelet selon la revendication 1, **caractérisé en ce que** l'insert (1') à composants électroniques est disposé et fixé dans un fourreau ou entre une bande supérieure et une bande inférieure du bracelet (1).

9. Procédé de réalisation d'un bracelet selon la revendication 8, **caractérisé en ce que** l'insert (1') à composants électroniques est disposé et fixé dans un fourreau ou entre une bande supérieure et une bande inférieure d'au moins un brin d'un bracelet (1) d'une montre-bracelet.

10. Procédé de réalisation d'un bracelet selon la revendication 8, **caractérisé en ce que** le fourreau ou les bandes inférieure et supérieure du bracelet (1) sont en cuir ou en matière synthétique ou tissée.

11. Procédé de réalisation d'un bracelet selon la revendication 1, **caractérisé en ce que** les pistes conductrices sont réalisés par un procédé de pulvérisation cathodique sélective plasma.

12. Procédé de réalisation d'un bracelet selon la revendication 1, **caractérisé en ce que** l'insert (1') à composants électroniques est enrobé dans un élastomère vulcanisé, tel qu'un caoutchouc nitrile ou un caoutchouc fluoré, ou dans une silicone ou dans un polyuréthane réticulé.

13. Procédé de réalisation d'un bracelet selon la revendication 1, **caractérisé en ce que** la couche de protection (7) est réalisée avec une matière thermoplastique élastomère résistante à l'environnement et aux chocs mécaniques.

14. Procédé de réalisation d'un bracelet selon la revendication 13, **caractérisé en ce que** la matière thermoplastique (7) est transparente aux ondes électromagnétiques.

15. Procédé de réalisation d'un bracelet selon la revendication 13, **caractérisé en ce que** la couche de protection (7) est en polyuréthane surmoulé.

16. Procédé de réalisation d'un bracelet selon la revendication 13, **caractérisé en ce que** la couche de protection (7) comprend une combinaison de pigments thermo-chromiques et de charges, pour permettre une modification de couleur de la couche de protection (7) en fonction de l'activité thermique des composants électroniques (4, 5, 6).

17. Bracelet (1) obtenu par le procédé de réalisation d'un bracelet selon l'une des revendications précédentes, **caractérisé en ce qu'**il comprend un insert (1') à composants électroniques, qui comprend un support souple (2), des pistes conductrices (3), des composants électroniques (4, 5, 6) reliés aux pistes conductrices (3) et une couche de protection (7) sur les composants électroniques (4, 5, 6) et le support souple (2), et **en ce que** l'insert (1') est disposé dans un fourreau ou entre une bande supérieure et une bande inférieure d'au moins un brin du bracelet (1), ou enrobé dans un élastomère vulcanisé ou dans une silicone ou dans un polyuréthane réticulé.

18. Bracelet (1) selon la revendication 17, **caractérisé en ce que** le support souple (2) de l'insert (1') comprend trois bandes disposées l'une au-dessus de l'autre ou côté à côte, **en ce qu'**une bande centrale est phosphorescente, et **en ce que** deux bandes latérales sont en couleur fluorescente.

19. Bracelet (1) selon la revendication 18, **caractérisé en ce que** l'insert (1') est enfermé dans une doublure en cuir ou en matière synthétique ou tissée, et **en ce qu'**une ouverture centrale (8) dans la doublure est prévue sur la bande centrale phosphorescente du support souple (2).

20. Bracelet (1) selon la revendication 18, **caractérisé en ce que** l'insert (1') est enfermé dans une doublure en cuir ou en matière synthétique ou tissée, et **en ce que** des ouvertures sont prévues dans une partie de bordure de la doublure sur les bandes fluorescentes du support souple (2) pour visionner une information.
